# EUROPEAN PATENT SPECIFICATION

(11) **EP 1 870 264 B1**
(45) Date of publication and mention of the grant of the patent: **29.02.2012**
(21) Application number: 07075468.4
(22) Date of filing: 13.06.2007
(51) Int. Cl.: B60G 13/00

(54) **A method of attaching a damper to a yoke**
Verfahren zum Befestigen eines Dämpfers an einem Gabelstück
Procédé de fixation d'un amortisseur sur une fourche

(30) Priority: 22.06.2006 GB 0612375
(43) Date of publication of application: 26.12.2007
(73) Proprietor: BWI Company Limited S.A., 1628 Luxembourg (LU)
(72) Inventor: Kaffanke, Sebastian, 32-050 Skawina (PL); Skrent, Bartosz, 58-300 Walbrzych (PL); Wierzbicki, Robert M., 30-110 Krakow (PL)
(74) Representative: Fox-Male, Nicholas Vincent Humbert

(56) References cited:
- DE-A1- 3 213 657
- DE-A1- 10 206 032
- GB-A- 1 145 942
- GB-A- 1 429 225
- GB-A- 1 462 771
- GB-A- 2 050 968
- GB-A- 2 093 157

## Description

### Technical Field

The present invention relates to a method of attaching a suspension damper to a yoke that is attached to another suspension component of a motor vehicle.

### Background of the Invention

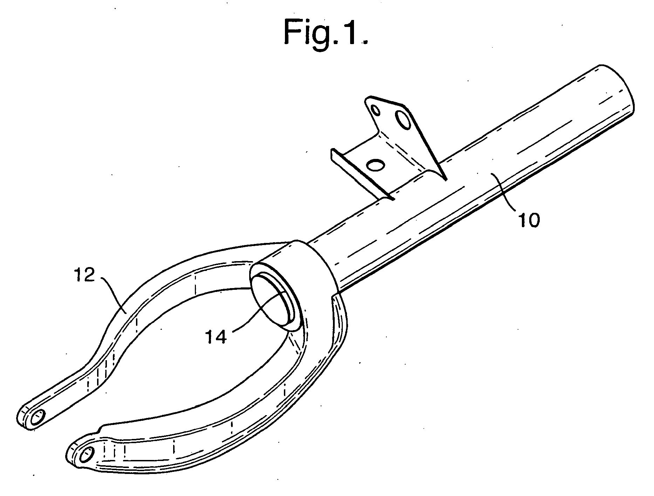

Various suspension systems require different damper attachments methods. One of the systems, a double-wishbone suspension (SLA) can be used for front driving axle where good isolation, low vertical packaging and good load distribution is needed. The suspension spring and the shock absorber are attached to the suspension by a fork, which creates an opening for the drive shaft. The damper and yoke loads are mainly limited to axial forces and bending torque. The twisting torque is still present but significantly limited compared to a typical McPherson suspension system. Based on load distribution only, few yoke to damper attachment methods are used. One of the common practices is to use a pinch bolt. The pinch bolt is generally formed on or attached to the yoke. The pinch bolt is substantially C-shaped and has a central bore for receiving the outer tube of the damper, and a pair of ears or lugs which are drawn together by a nut and bolt to clamp the pinch bolt to the damper tube. In an alternative arrangement (shown in Figure 1), the damper tube is integral part of a yoke. The yoke has an aperture at one end for receiving the damper tube. The damper tube and yoke are welded together. However, there is a desire to reduce the mass of the yoke. Consequently, it is desired to manufacture the yoke from a high strength alloy. Such alloys, especially cast high-strengthen steels, are not susceptible to welding.

A method of attaching a damper to a yoke according to the preamble of claim 1 is known from GB-A-1 462 771.

### Summary of the Invention

It is an object of the present invention to overcome the above mentioned problem.

A method in accordance with the present invention comprises the steps of reducing the diameter of a portion of a tube of a suspension damper extending axially from one end of the tube to form a shoulder in the tube at a predetermined distance from the end of the tube; passing the portion of the tube through an aperture in one end of a yoke until the yoke engages the shoulder and with the end of the tube extending out of the aperture on the opposite side to the shoulder; and deforming the end of the tube to increase the diameter of a part of the portion of the tube adjacent the end and to press the part into engagement with the yoke to secure the tube to the yoke.

The outer diameter of the portion of the tube, and the inner diameter of the aperture are such that the portion of the tube makes a tight sliding fit in the aperture. The yoke is therefore rigidly secured to the tube by being fixed between the shoulder and the deformed tube end. There is no requirement for welding.

### Brief Description of the Drawings

The present invention will now be described, by way of example, with reference to the accompanying drawings, in which:-
Figure 1 is a perspective view of a prior known arrangement which involves a welding step;
Figure 2 is a partial cross-sectional view of the damper and yoke after assembly using the method of the present invention; and
Figure 3 is an enlarged picture of the cross-section of Figure 2.

### Description of the Preferred Embodiment

Referring to the prior art of Figure 1, the outer tube 10 of a suspension damper is secured to a yoke 12. The yoke 12 is integral with or attachable to the steering knuckle. The yoke has an aperture 14 at one end for receiving the damper tube 10. The damper tube 10 and yoke 12 are welded together around the aperture 14.

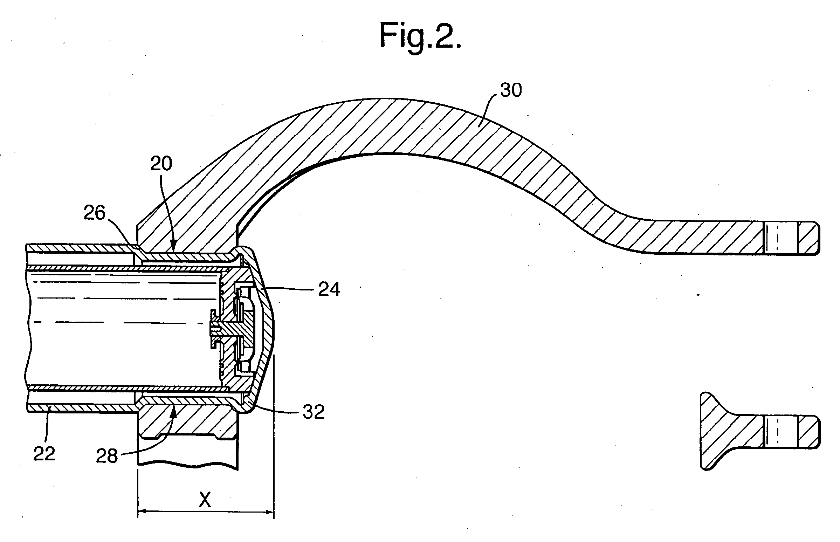

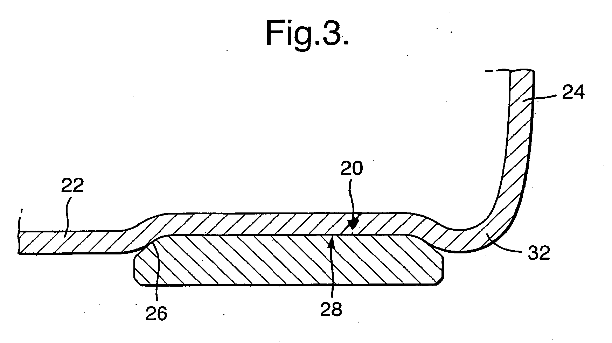

Referring to Figure 2 and 3, in accordance with the present invention, the method comprises a sequence of steps. A first step requires the reduction of the diameter of a portion 20 of a tube 22 of a suspension damper. The portion 20 extends axially from one end 24 of the tube 22, and the reduction step forms a shoulder 26 in the tube at a predetermined distance X from the end 24 of the tube. A second step involves passing the portion 20 of the tube 22 through an aperture 28 in one end of a yoke 30 until the yoke engages the shoulder 26. The predetermined distance X is determined such that the end 24 of the tube 22 extends out of the aperture 28 on the opposite side of the aperture to the shoulder 26. The third step requires deforming the end 24 of the tube 22 protruding from the aperture 28 to increase the diameter of a part 32 of the portion 20 of the tube adjacent the end 24 and to press the part 32 into engagement with the yoke 30. This third step secures the tube 22 to the yoke 30 by trapping the yoke between the shoulder 26 and the deformed part 32.

The outer diameter of the portion 20 of the tube 22, and the inner diameter of the aperture 28 in the yoke 30 are preferably such that the portion of the tube makes a tight sliding fit in the aperture. The yoke 30 is therefore rigidly secured to the tube 22 by being fixed between the shoulder 26 and the deformed part 32 of the portion 20 of the tube adjacent the tube end 24. There is no requirement for welding. The present invention provides an alternative method for attaching the suspension damper of Figure 1 to the yoke of Figure 1.

The first step involving the reduction in the diameter of the portion 20 of the tube 22 may be by any suitable method, such as drawing down using a suitable die. The third step involving the deforming of the end 24 of the tube 22 may be by any suitable method, such as cold pressing.

## Claims

1. A method of attaching a damper to a yoke comprising the steps of reducing the diameter of a portion (20) of a tube (22) of a suspension damper extending axially from one end (24) of the tube (22) to form a shoulder (26) in the tube at a predetermined distance from the end (24) of the tube; passing the portion (20) of the tube (22) through an aperture (28) in one end of a yoke (30) until the yoke engages the shoulder (26) and with the end (24) of the tube (22) extending out of the aperture (28) on the opposite side to the shoulder (26) **characterised by** the step of deforming the end (24) of the tube (22) to increase the diameter of a part (32) of the portion (20) of the tube adjacent the end (24) and to press the part (32) into engagement with the yoke (30) to secure the tube (22) to the yoke (30).

2. A method as claimed in Claim 1, wherein the reduction step comprises drawing down using a die.

3. A method as claimed in Claim 1 or Claim 2, wherein the deforming step comprises cold pressing.

## Patentansprüche

1. Ein Verfahren zum Befestigen eines Dämpfers an einem Gabelstück, wobei das Verfahren die Schritte des Verringerns des Durchmessers eines Teilbereichs (20) eines Rohrs (22) eines Federdämpfers, der sich axial von einem Ende (24) des Rohrs (22) erstreckt, um einen Absatz (26) in dem Rohr bei einer vorbestimmten Distanz von dem Ende (24) des Rohrs zu bilden; des Durchführens des Teilbereichs (20) des Rohrs (22) durch eine Öffnung (28) in einem Ende eines Gabelstücks (30), bis das Gabelstück in den Absatz (26) eingreift, und mit dem Ende (24) des Rohrs (22) sich aus der Öffnung (28) auf der entgegengesetzten Seite zu dem Absatz (26) erstreckt, aufweist, **gekennzeichnet durch** den Schritt des Verformens des Endes (24) des Rohrs (22), um den Durchmesser eines Teils (32) des Teilbereichs (20) des Rohrs angrenzend an das Ende (24) zu erhöhen und den Teil (32) in Eingriff mit dem Gabelstück (30) zu pressen, um das Rohr (22) an dem Gabelstück (30) zu sichern.

2. Ein Verfahren gemäß Anspruch 1, wobei der Verringerungsschritt Tiefziehen unter Verwendung eines geeigneten Ausformwerkzeugs aufweist.

3. Ein Verfahren gemäß Anspruch 1 oder Anspruch 2, wobei der Verformungsschritt Kaltpressen aufweist.

## Revendications

1. Procédé de montage d'un amortisseur sur une fourche comprenant les étapes consistant à réduire le diamètre d'une portion (20) d'un tube (22) d'un amortisseur de suspension s'étendant axialement depuis une extrémité (24) du tube (22) pour former une épaule (26) dans le tube à une distance prédéterminée de l'extrémité (24) du tube, à passer la portion (20) du tube (22) à travers une ouverture (28) dans une extrémité d'une fourche (30) jusqu'à ce que la fourche s'engage avec l'épaule (26), l'extrémité (24) du tube (22) s'étendant hors de l'ouverture (28), sur le côté opposé à l'épaule (26), **caractérisé par** l'étape consistant à déformer l'extrémité (24) du tube pour augmenter le diamètre d'une partie (32) de la portion (20) du tube adjacente à l'extrémité (24) et à presser la partie (32) jusqu'à ce qu'elle s'engage avec la fourche (30) afin de fixer le tube (22) à la fourche (30).

2. Procédé suivant la revendication 1, dans lequel l'étape de réduction comprend un étranglement en utilisant une matrice.

3. Procédé suivant la revendication 1 ou 2, dans lequel l'étape de déformation comprend un pressage à froid.
